# FASCICULE DE BREVET EUROPEEN

(11) **EP 0 779 951 B1**
(45) Date de publication et mention de la délivrance du brevet: **19.05.1999**
(21) Numéro de dépôt: 95930561.6
(22) Date de dépôt: 08.09.1995
(51) Int. Cl.: F16B 45/02, B63B 21/54

(54) **MOUSQUETON MAN UVRABLE A DISTANCE, PERMETTANT D'AMARRER UN CORDAGE**
FERNBEDIENBARER KARABINERHAKEN, ZUM FESTMACHEN EINES TAUES
REMOTE MANOEUVRABLE SNAP-HOOK TO MAKE A ROPE FAST

(30) Priorité: 09.09.1994 FR 9410992
(43) Date de publication de la demande: 25.06.1997
(73) Titulaire: Le Noach, Gérard, 83400 Hyères (FR)
(72) Inventeur: Le Noach, Gérard, 83400 Hyères (FR)
(74) Mandataire: Maureau, Philippe
(86) Numéro de dépôt international: FR9501153
(87) Numéro de publication internationale: WO9607830

(56) Documents cités:
- DE-U- 8 706 660
- FR-E- 8 911
- US-A- 2 492 991
- US-A- 3 008 210

## Description

La présente invention concerne un mousqueton permettant d'amarrer un cordage à un point fixe distant ou de libérer ce cordage de ce point fixe, également à distance.

Il est fréquent, notamment en matière de nautisme, d'avoir à réaliser un tel amarrage à un point fixe situé à distance. Le cas se présente par exemple lorsque l'on doit amarrer un bateau à une bouée reliée à un corps mort, à un quai équipé d'anneaux ou de mains courantes, ou aux barreaux d'une échelle dans une écluse.

Il peut, en pratique, être difficile, dangereux ou même impossible de s'approcher du point fixe pour nouer ou engager directement le cordage autour dudit point fixe.

On connaît d'employer des mousquetons pour réaliser de tels amarrages. Ces mousquetons facilitent l'amarrage ou la libération du cordage mais doivent toutefois être manoeuvrés manuellement pour être ouverts et pour être maintenus en position d'ouverture, ce qui implique de s'approcher de ce point fixe. Le problème précité n'est, dès lors, pas résolu.

Le brevet américain US 2 492 991 décrit un mousqueton pour harnais de parachute. Le doigt basculant de fermeture ou d'ouverture de ce mousqueton comprend un levier pivotant autour d'un axe perpendiculaire au plan du mousqueton, qui est muni d'une barrette transversale apte à prendre appui ou non sur le bord extérieur du corps du mousqueton, selon la position du levier par rapport au doigt basculant. La venue de cette barrette en appui sur le bord extérieur du corps du mousqueton permet de faire basculer le doigt en position d'ouverture partielle du mousqueton.

Le levier de ce mousqueton est uniquement destiné à être actionné manuellement, et non à distance. En particulier, l'ouverture que comprend l'extrémité libre du levier sert uniquement à permettre la fixation d'une languette de préhension manuelle, et n'est pas conformée pour permettre le transport du mousqueton vers un point d'amarrage distant, ni la manoeuvre du levier à distance. Ce mousqueton ne peut donc permettre un amarrage à distance comme indiqué ci-dessus.

De plus, l'ouverture partielle de ce mousqueton ne permet en aucun cas un engagement sur un point d'amarrage distant.

La présente invention vise à remédier à ces inconvénients en fournissant un mousqueton pouvant être transporté, engagé sur le point d'amarrage et manoeuvré à distance, ce mousqueton devant en outre rester simple et rapide à utiliser, avoir une ouverture facile, même à distance, pouvoir être actionné notamment avec une gaffe classique très couramment utilisée en nautisme, et être simple à fabriquer.

Ce mousqueton est du type décrit par le brevet américain précité, comprenant un levier dont l'extrémité libre fait saillie au-delà du corps du mousqueton et comprend une ouverture.

Selon l'invention, cette ouverture présente une forme arrondie du côté de l'extrémité du levier, et a des dimensions permettant d'une part l'engagement de l'extrémité d'une tige de transport et d'actionnement du levier à distance, munie d'un épaulement à cette extrémité, notamment du téton que comprend classiquement l'extrémité d'une gaffe utilisée en nautisme, et permettant d'autre part le pivotement du levier par rapport à cette tige dans un plan parallèle au plan du mousqueton.

Grâce à cette ouverture, le levier selon l'invention peut être engagé sur l'extrémité de la tige, notamment sur le téton précité d'une gaffe, jusqu'à venir buter sur ledit épaulement.

Le pivotement de l'extrémité de la tige dans l'ouverture du levier permet d'opérer une poussée axiale sur la tige et/ou une traction sur le cordage relié au mousqueton pour déplacer le levier et réaliser le basculement du doigt du mousqueton en position d'ouverture.

La forme arrondie de l'ouverture permet au levier de venir prendre appui, lorsqu'il est en position pivoté, de part et d'autre de la partie d'extrémité de la tige, notamment de la base du téton d'une gaffe, selon une position oblique par rapport à celle-ci. Cette prise d'appui a pour effet de parfaitement immobiliser le mousqueton par rapport à la tige.

La tige permet ainsi de porter le mousqueton, avec le cordage qui y est relié, en direction du point d'amarrage distant, sans risque d'échappement, et d'engager facilement le mousqueton, à distance, autour du point d'amarrage, du fait de l'absence de jeu entre le mousqueton et la tige.

Le levier retrouve sa position d'origine lors du retrait de la tige, ce qui permet la fermeture du mousqueton.

La réouverture du mousqueton peut être réalisée au moyen de la tige, par engagement de son extrémité dans l'ouverture et poussée du levier, de la même manière qu'indiqué ci-dessus.

Le mousqueton peut également être équipé d'un filin souple relié au levier et passant dans un oeillet aménagé dans le corps du mousqueton. Une traction exercée sur ce filin permet dans un premier temps de déplacer le levier le long du corps du mousqueton pour réaliser le basculement du doigt en position d'ouverture puis, dans un deuxième temps, c'est-à-dire lorsque le levier est en fin de course, de faire basculer le mousqueton par rapport au point d'amarrage, afin de le dégager de celui-ci. Ce basculement est favorisé par la forme courbe que présente le corps du mousqueton.

Avantageusement, le levier n'est pas rectiligne mais présente une inflexion au niveau de la base de l'ouverture, de manière à ce que sa partie délimitant l'ouverture soit déportée du côté du mousqueton relié au cordage. Cette inflexion permet d'augmenter le débattement du levier autour de l'extrémité de la tige et d'obtenir une large ouverture du mousqueton, qui facilite l'engagement autour du point d'amarrage.

De préférence, le levier est réalisé en fil métallique de section circulaire, ce qui favorise l'introduction de l'extrémité de la tige dans l'ouverture du levier, pour l'ouverture à distance du mousqueton.

Pour sa bonne compréhension, l'invention est à nouveau décrite ci-dessous en référence au dessin schématique annexé représentant, à titre d'exemples non limitatifs, plusieurs formes de réalisation du mousqueton qu'elle concerne.
La figure 1 en est une vue de côté ;
la figure 2 en est une vue en bout ;
les figures 3 et 4 en sont des vues en cours de fonctionnement, dans deux positions différentes ;
la figure 5 en est une vue de côté selon une variante de réalisation, dans une première position ;
la figure 6 en est une vue similaire à la figure 5, dans une deuxième position, et
les figures 7 à 9 en sont des vues selon trois autres variantes de réalisation.

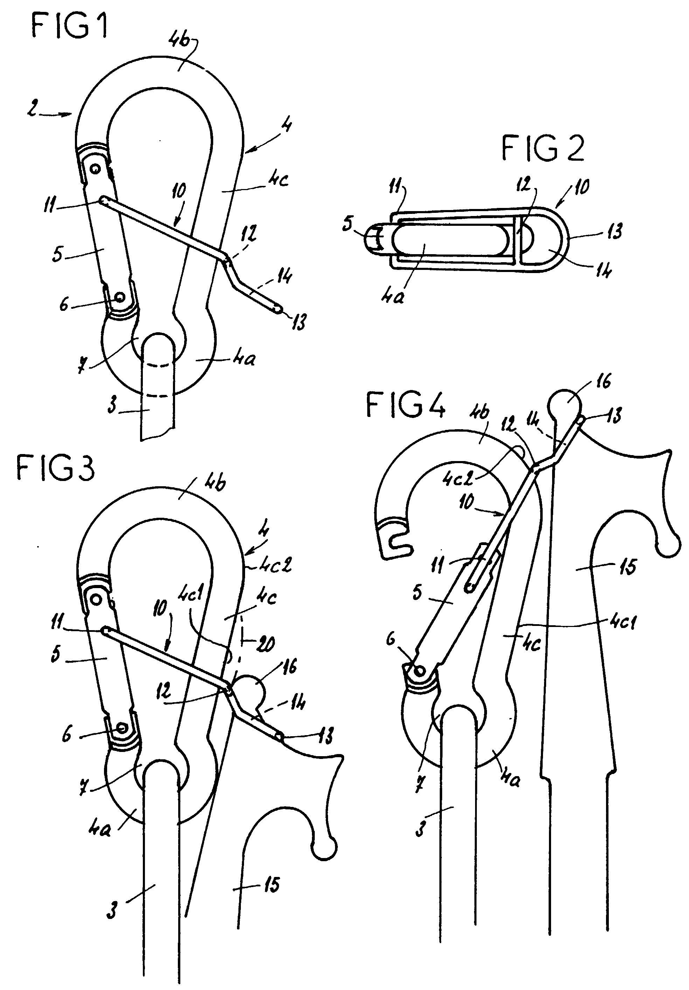

La figure 1 représente un mousqueton 2 relié à un cordage 3.

Le mousqueton 2 comprend, de manière classique, un corps 4, un doigt basculant 5, monté pivotant sur le corps 4 autour d'un axe 6, et des moyens élastiques (non visibles) de rappel du doigt 5 en position fermée du mousqueton 2 montrée à la figure 1.

Le corps 4 présente une extrémité 4a formant un oeillet 7 de réception du cordage, une extrémité opposée 4b de forme courbe et une portion 4c située du côté opposé au doigt basculant 5. Ce dernier et la portion 4c divergent l'un de l'autre en direction opposée à l'oeillet 7.

Le mousqueton 2 est en outre équipé d'un levier 10, visible sous deux angles différents aux figures 1 et 2.

Ce levier 10 est réalisé en fil métallique de section circulaire, ayant un diamètre de l'ordre de 1 ou 2 millimètres. Il est monté pivotant sur le doigt basculant 5 autour d'un axe 11 parallèle à l'axe 6, et présente une barrette transversale 12, destinée à venir en appui contre la partie 4c du corps 4, et une extrémité libre 13, faisant saillie au-delà du corps 4 du mousqueton 2.

L'extrémité libre 13 présente une ouverture 14 de forme arrondie du côté de l'extrémité du levier 10, comme cela apparaît sur la figure 2.

Le levier 10 n'est pas rectiligne mais présente une inflexion 19 au niveau de la base de l'ouverture 14, de manière à ce que sa partie délimitant l'ouverture 14 soit déportée du côté du mousqueton 2 relié au cordage 3.

Les figures 3 et 4 montrent le mousqueton 2 et le levier 10, ainsi qu'une gaffe 15 classique couramment utilisée dans le domaine du nautisme.

Il apparaît par comparaison de ces figures que le téton d'extrémité 16 de la gaffe 15 peut être engagé au travers de l'ouverture 14 et que le levier 10 peut pivoter dans celle-ci par rapport à ce téton 16, dans un plan parallèle au plan du mousqueton 2.

Cet engagement et ce pivotement permettent d'accrocher le mousqueton 2 à la gaffe 15 et d'opérer une poussée axiale sur la gaffe 15 et/ou une traction sur le cordage 3 pour déplacer le levier 10. Le passage de la barrette 12 de la portion 4c1 à la portion 4c2, située au-delà de l'arc de cercle 20, réalise le basculement du doigt 5 en position d'ouverture. Ce basculement se produit de manière d'autant plus rapide que la portion 4c du corps 4 s'éloigne rapidement dudit arc de cercle 20, ce qui est le cas du mousqueton 2 dont le doigt basculant 5 et la portion 4c divergent l'un de l'autre du côté opposé à l'oeillet 7.

La forme arrondie de l'ouverture permet au levier 10 de venir prendre appui, lorsqu'il est en position pivoté, de part et d'autre de la base du téton 16, selon une position oblique par rapport à celui-ci. Cette prise d'appui a pour effet de parfaitement immobiliser le mousqueton 2 par rapport à la gaffe 15.

La gaffe 15 permet ainsi de porter le mousqueton 2, avec le cordage 3 qui y est relié, en direction du point d'amarrage distant, sans risque d'échappement, et d'engager facilement le mousqueton 2, à distance, autour du point d'amarrage, du fait de l'absence de jeu entre le mousqueton 2 et la gaffe 15.

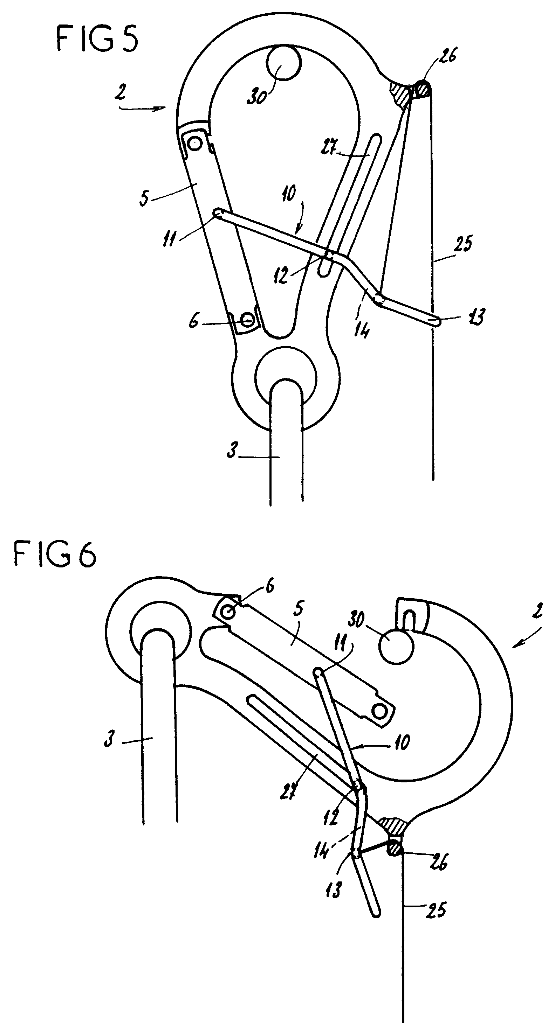

Les figures 5 et 6 montrent que l'extrémité libre 13 du levier 10 peut être reliée à un filin souple 25 passant dans un oeillet 26 situé sensiblement à la hauteur de l'extrémité libre du doigt basculant 5, du côté opposé à celui-ci. Une traction exercée sur ce filin 25 permet dans un premier temps de déplacer le levier 10 le long du corps du mousqueton 2 pour réaliser le basculement du doigt 5 en position d'ouverture de la manière décrite ci-dessus, puis, dans un deuxième temps, c'est-à-dire lorsque le levier 10 est en fin de course et se trouve à proximité dudit oeillet 26, de faire basculer le mousqueton 2 par rapport au point d'amarrage 30 sur lequel il est engagé. Ce basculement est favorisé par la forme courbe que présente la portion 4b du corps 4.

Il va de soi que l'invention n'est pas limitée à la forme de réalisation décrite ci-dessus à titre d'exemple mais qu'elle en embrasse toutes les variantes de réalisation.

Ainsi, la barrette transversale 12 peut ne pas glisser sur le bord extérieur de la portion 4c du corps 4 mais à l'intérieur d'une lumière longitudinale 27 aménagée dans celui-ci.

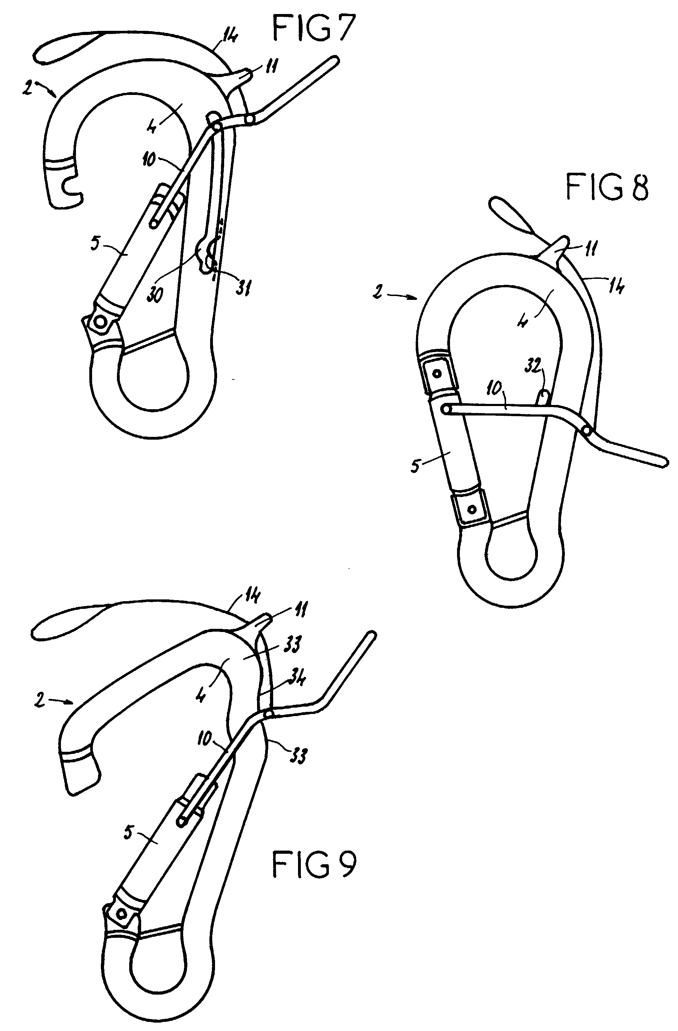

Les figures 7, 8 et 9 montrent que le mousqueton peut comprendre des moyens de maintien du levier 10 en position de fermeture ou d'ouverture du mousqueton 2, à savoir, respectivement, une encoche 30 et un ressort 31, une barrette transversale interne 32, de forme courbe, permettant le coincement du levier 10 en position de fermeture, ou une double inflexion 33 du corps 4 délimitant un évidement extérieur 34 de maintien du levier 10 en position d'ouverture.

En outre, le mousqueton selon l'invention peut être utilisé dans d'autres domaines que le nautisme, et être manoeuvré par tout type de tige comportant un épaulement à une extrémité.

## Revendications

1. Mousqueton (2) permettant d'amarrer un cordage (3) à un point fixe distant ou de libérer ce cordage de ce point fixe, également à distance, comprenant un doigt basculant (5) muni d'un levier pivotant (10) apte à prendre appui ou non sur le bord extérieur du corps (4) du mousqueton, selon la position du levier (10) par rapport au doigt basculant (5), le levier (10) ayant une extrémité libre qui fait saillie au-delà du corps (4) du mousqueton et qui comprend une ouverture (14), mousqueton (2) caractérisé en ce que cette ouverture (14) présente une forme arrondie du côté de l'extrémité du levier (10), et a des dimensions permettant d'une part l'engagement de l'extrémité d'une tige de transport et d'actionnement du levier (10) à distance, munie d'un épaulement à cette extrémité, notamment du téton (16) que comprend classiquement l'extrémité d'une gaffe (15) utilisée en nautisme, et permettant d'autre part le pivotement du levier (10) par rapport à cette tige dans un plan parallèle au plan du mousqueton (2).

2. Mousqueton selon la revendication 1, caractérisé en ce que le levier (10) présente une inflexion (19) au niveau de la base de l'ouverture (14), de manière à ce que sa partie délimitant l'ouverture (14) soit déportée du côté du mousqueton (2) relié au cordage (3).

3. Mousqueton selon la revendication 1 ou la revendication 2, caractérisé en ce que le levier (10) est réalisé en fil métallique de section circulaire.

4. Mousqueton selon l'une des revendications 1 à 3, caractérisé en ce qu'il est équipé d'un filin souple (25) relié au levier (10) et passant dans un oeillet (26) aménagé dans le corps (4).

5. Mousqueton selon l'une des revendications 1 à 4, caractérisé en ce que la barrette transversale (12) du levier (10) qui vient en appui contre le corps (4) est engagée à l'intérieur d'une lumière longitudinale (27) aménagée dans la portion (4c) du corps (4).

6. Mousqueton selon l'une des revendications 1 à 5, caractérisé en ce qu'il comprend des moyens (30 à 34) de maintien du levier (10) en position de fermeture ou d'ouverture du mousqueton (2), tels qu'une encoche (30) et un ressort (31), une barrette transversale interne (32), de forme courbe, permettant le coincement du levier (10) en position de fermeture, ou une double inflexion (33) du corps (4) délimitant un évidement extérieur (34) de maintien du levier (10) en position d'ouverture.

## Patentansprüche

1. Karabinerhaken zum Festmachen eines Taues an einem entfernten Festpunkt oder zum Freigeben dieses Taues von diesem entfernten Festpunkt, beinhaltend einen klappbaren Finger (5), der mit einem schwenkbaren Hebel (10) versehen ist, der sich je nach Stellung des Hebels (10) im Verhältnis zum klappbaren Finger (5) auf dem Außenrand des Körpers (4) des Karabinerhakens abstützen kann oder nicht, wobei der Hebel (10) ein freies Ende hat, das über den Körper (4) des Karabinerhakens hinaus vorspringt und das eine Öffnung (14) hat, Karabinerhaken (2), **dadurch gekennzeichnet,** daß diese Öffnung (14) eine abgerundete Form der Seite des Endes des Hebels (10) aufweist und Abmessungen hat, die einerseits das Eingreifen des Endes einer Fernbedienungs- und Transportstange für den Hebel (10) ermöglicht, die an diesem Ende mit einer Schulter versehen ist, insbesondere einem Ansatzstück (16) wie es üblich das Ende eines Bootshakens (15) beinhaltet, der in der Nautik eingesetzt wird und die andererseits die Schwenkung des Hebels (10) bezüglich dieser Stange in einer Ebene parallel zur Ebene des Karabinerhakens (2) ermöglichen.

2. Karabinerhaken nach Anspruch 1, **dadurch gekennzeichnet,** daß der Hebel (10) eine Abknickung (19) in Höhe der Basis der Öffnung (14) aufweist, derart, daß sein die Öffhung (14) begrenzender Bereich versetzt zur Seite des Karabinerhakens (2), die mit dem Tau (3) verbunden ist, ist.

3. Karabinerhaken nach Anspruch 1 oder Anspruch 2, **dadurch gekennzeichnet,** daß der Hebel (10) aus einem Metalldraht mit kreisförmigem Querschnitt hergestellt ist.

4. Karabinerhaken nach einem der Ansprüche 1-3, **dadurch gekennzeichnet,** daß er mit einer biegsamen Trosse (25) ausgerüstet ist, die mit dem Hebel (10) verbunden ist und durch eine Öse (26) läuft, die am Körper (4) vorgesehen ist.

5. Karabinerhaken nach einem der Ansprüche 1-4, **dadurch gekennzeichnet,** daß der Querstab (12) des Hebels (10), der in Anlage an den Körper (4) kommt, im Inneren eines Längsschlitzes (27) angeordnet ist, der in dem Abschnitt (4c) des Körpers (4) vorgesehen ist.

6. Karabinerhaken nach einem der Ansprüche 1-5, **dadurch gekennzeichnet,** daß er Mittel (30-34) zur Haltung des Hebels (10 ) in der Schließstellung oder Offenstellung des Karabinerhakens (2) aufweist, wie eine Raste (30) und eine Feder (31), einen inneren, bogenförmigen Quersteg (32), zum Verklemmen des Hebels (10) in der Schließstellung, oder eine doppelte Abknickung (33) des Körpers (14), die eine äußere Ausnehmung (34) zur Haltung des Hebels (10) in der Offenstellung, begrenzt

## Claims

1. Snap-hook (2) making it possible to secure a rope (3) to a distant fixed point or to release this rope from this fixed point, also from a distance, comprising a tilting finger (5) equipped with a pivoting lever (10) capable of bearing or of not bearing on the outer edge of the body (4) of the snap-hook depending on the position of the lever (10) with respect to the tilting finger (5), the lever (10) having a free end which projects beyond the body (4) of the snap-hook and which has an opening (14), the snap-hook (2) being characterized in that this opening (14) has a rounded shape on the same side as the end of the lever (10) and has dimensions which on the one hand allow the engagement of the end of a rod for transporting and actuating the lever (10) from a distance, this rod being equipped at this end with a shoulder, especially the stud (16) conventionally to be found at the end of a boat-hook (15) used in boating and, on the other hand, allow the lever (10) to be pivoted with respect to this rod in a plane parallel to the plane of the snap-hook (2).

2. Snap-hook according to claim 1, characterized in that the lever (10) has a point of inflexion (19) at the base of the opening (14) so that its part delimiting the opening (14) is offset on the side of the snap-hook (2) attached to the rope (3).

3. Snap-hook according to claim 1 or claim 2, characterized in that the lever (10) is made of metal wire of circular section.

4. Snap-hook according to one of claims 1 to 3, characterized in that it is equipped with a flexible cord (25) attached to the lever (10) and passing through an eye (26) formed in the body (4).

5. Snap-hook according to one of claims 1 to 4, characterized in that the transverse bar (12) of the lever (10) which comes to bear against the body (4) is engaged inside a longitudinal slot (27) formed in the portion (4c) of the body (4).

6. Snap-hook according to one of claims 1 to 5, characterized in that it comprises means (36 to 34) for keeping the lever (10) in the position in which the snap-hook (2) is closed or open, these being such as a notch (30) and a spring (31), an internal transverse bar (32) of curved shape, allowing the lever (10) to be jammed in the closed position, or a double point of inflexion (33) of the body (4) delimiting an external cavity (34) for keeping the lever (10) in the open position.
